# EUROPÄISCHE PATENTSCHRIFT

(11) **EP 3 729 740 B1**
(45) Veröffentlichungstag und Bekanntmachung des Hinweises auf die Patenterteilung: **15.12.2021**
(21) Anmeldenummer: 18829326.0
(22) Anmeldetag: 18.12.2018
(51) Int. Cl.: H04L 12/42, H04L 12/437, H04L 12/40

(54) **FAHRZEUG MIT AUSFALLSICHERER INTERNER DATENÜBERTRAGUNG**
VEHICLE HAVING FAIL-SAFE INTERNAL DATA TRANSFER
VÉHICULE COMPORTANT UNE TRANSMISSION DE DONNÉES INTERNE PROTÉGÉE CONTRE LES DÉFAILLANCES

(30) Priorität: 18.12.2017 DE 102017130386
(43) Veröffentlichungstag der Anmeldung: 28.10.2020
(73) Patentinhaber: Northrop Grumman LITEF GmbH, 79115 Freiburg (DE)
(72) Erfinder: DECK, Matthias, 79189 Bad Krozingen (DE)
(74) Vertreter: Müller Hoffmann & Partner
(86) Internationale Anmeldenummer: PCT/EP2018/085600
(87) Internationale Veröffentlichungsnummer: WO 2019/121750

(56) Entgegenhaltungen:
- US-A1- 2011 029 687
- US-A1- 2011 116 508
- US-A1- 2015 138 954

## Beschreibung

Die vorliegende Erfindung betrifft ein Fahrzeug mit ausfallsicherer interner Datenübertragung, insbesondere ein Schiff oder ein U-Boot mit einem hochverfügbaren Navigationsnetzwerk.

Auf Fahrzeugen, insbesondere militärischen Fahrzeugen wie Schiffen und U-Booten ist die ständige, aktuelle Verfügbarkeit von Navigationsdaten überlebenswichtig. Die Verwendung von Ethernet-basierten Netzwerken auf Fahrzeugen ist bekannt, jedoch werden diese Netzwerke in der Regel als Sternnetz mit einer Stern-Topologie mit Netzwerk-Switches oder als Busnetz, bei welchem alle Teilnehmer über kurze Leitungen an einem gemeinsamen Datenübertragungsmedium (Bus) angeschlossen sind, ausgebildet. Somit liegen durch die Verwendung von Netzwerk-Switches sogenannte "Single-Points-of-Failure" vor, die die Verfügbarkeit und Zuverlässigkeit des Netzwerkes einschränken. Ein Ansatz, diese Fehlerquelle durch ein zweites, paralleles Netzwerk zu eliminieren, führt zu einem erhöhten Verkabelungsaufwand und zusätzlichen Switches an Bord des Fahrzeugs, insbesondere eines Schiffes. Auch werden die Nachrichten in den Applikationen gedoppelt und über die zwei parallelen Netzwerke versendet. Der Empfänger muss dann das Duplikat herausfiltern.

US 2011/0116508 A1 beschreibt eine Netzwerkkopplungsvorrichtung, die über einen jeweiligen ersten und zweiten Port in einem Kommunikationsnetzwerk mit einer Ringtopologie verbunden ist, die mit Vollduplexverbindungen arbeitet. Beim Senden von Informationen fügt das Kopplungsgerät zwei doppelte Frames in den Ring ein, einen über jeden seiner Ports. Die Frames enthalten Informationen, die diese beiden Frames als ein Paar von Duplikaten desselben Frames identifizieren. Jedes ähnliche Gerät im Ring enthält ein Vermittlungselement, das einen Frame von einem Port empfängt und den Frame ohne Änderung an den anderen Port weiterleitet. Das Vermittlungselement verwirft einen Frame, der ursprünglich von demselben Knoten gesendet wurde, verwirft einen Frame, den es bereits in diese Richtung weitergeleitet hat, und / oder verwirft einen Frame, den es nicht als Mitglied eines Paares erkennt. Ein weiteres ähnliches Gerät auf dem Ring ist in der Lage, die zwei doppelten Rahmen zu empfangen und die früher empfangenen Rahmen eines Paares an die Anwendung weiterzuleiten, während die später empfangenen Rahmen auf der Grundlage der Identifikation innerhalb der Rahmen verworfen werden.

US 2011/0029687 A1 beschreibt deterministische Datenübertragung von Echtzeitbetriebsdaten in hochverfügbaren, nahtlos redundanten (HSR) Ringkommunikationsnetzwerken mit mindestens einem Hauptknoten, einem Quellknoten und einem Zielknoten. Jeder Knoten kann erste und zweite Kommunikationsports enthalten, die mit einem jeweiligen ersten und zweiten Nachbarknoten des Kommunikationsnetzwerks verbunden sind, um einen Frame über den ersten Kommunikationsport zu empfangen und den empfangenen Frame über den zweiten Kommunikationsport weiterzuleiten. Der Masterknoten sendet einen ersten und einen zweiten redundanten Rahmen oder ein leeres Datenpaket an seinen ersten bzw. zweiten Nachbarknoten. Beim Empfang der zwei redundanten Rahmen fügt der Quellknoten Prozessdaten in ein vorbestimmtes und dediziertes Feld jedes Rahmens ein. Jeder der beiden geladenen redundanten Rahmen wird sofort und einzeln an den ersten bzw. den zweiten Nachbarknoten des Quellknotens weitergeleitet. Der Zielknoten extrahiert die Prozessdaten aus dem ersten ankommenden geladenen redundanten Frame des Paares.

DE 10 2012 210 057 A1 beschreibt ein ringförmiges Netzwerk (auch redundant) zum Datenaustausch zwischen mehreren in einem Fahrzeug (6) angeordneten Geräten (2; 3; 4; 5). Das ringförmige Netzwerk umfasst eine Ringverbindung (1) und mehrere Verteiler (8). Die Verteiler (8) weisen jeweils mehrere Kommunikationspaare (9; 10; 11) auf, die jeweils eine Sendeeinheit (12; 15; 16) und eine Empfangseinheit (13; 14; 17) zum Senden und Empfangen von Daten aufweisen. Jedes der Geräte (2; 3; 4; 5) ist über ein erstes Kommunikationspaar (9) mit einem der Verteiler (8), über ein zweites Kommunikationspaar (10) mit der Ringverbindung (1) sowie über ein drittes Kommunikationspaar (11) ebenfalls mit der Ringverbindung (1) verbunden. Eine Datenflussrichtung in dem zweiten Kommunikationspaar (10) und dem dritten Kommunikationspaar (11) ist entgegengesetzt.

Der vorliegenden Erfindung liegt daher die Aufgabe zugrunde, ein Fahrzeug mit ausfallsicherer interner Datenübertragung bereitzustellen, welches eine hohe Zuverlässigkeit der internen Datenübertragung bei gleichzeitig verringertem Verkabelungsaufwand bereitstellt.

Diese Aufgabe der vorliegenden Erfindung wird durch das Fahrzeug mit ausfallsicherer interner Datenübertragung nach Anspruch 1 gelöst. Vorteilhafte Ausgestaltungen und Weiterbildungen der Erfindung sind in den Unteransprüchen angegeben.

Erfindungsgemäß ist ein Fahrzeug mit ausfallsicherer interner Datenübertragung vorgesehen, welches einen Fahrzeugkörper, ein am Fahrzeugkörper vorgesehenes, kabelgebundenes Datenübertragungsnetzwerk, und am Fahrzeugkörper vorgesehene Netzwerkteilnehmer aufweist. Die Netzwerkteilnehmer sind über Netzwercknoten des Datenübertragungsnetzwerks jeweils miteinander verbunden. Das Datenübertragungsnetzwerk weist eine Daten übertragende Ring-Verkabelung auf. Eine von der datenübertragenden Ring-Verkabelung umgrenzte Minimalfläche ist größer als 20% einer maximalen Querschnittsfläche des Fahrzeugkörpers.

### GEAENDERTES BLATT

Die Erfindung betrifft also hochverfügbare Navigationsnetzwerke für Schiffe und U-Boote, bei welchen eine hohe Zuverlässigkeit durch Redundanz und Vermeidung von "Single-Points-of-Failure" erreicht wird. Hierbei wird innerhalb eins Fahrzeugkörpers wie beispielsweise eines Schiffskörpers, eines Flugzeugkörpers oder eines Landfahrzeugkörpers eine Daten übertragende Ring-Verkabelung so verlegt, dass bei einer Durchtrennung des Netzwerkkabels eine Verbindung sämtlicher Netzwerkknoten und angeschlossener Geräte bestehen bleibt. Somit kann also gerade bei einer Verwendung im militärischen Bereich sichergestellt werden, dass bei einer Zerstörung eines Bereichs des Fahrzeugkörpers sichergestellt wird, dass ein Waffensystem nach wie vor mit entsprechenden Lage- und Navigationsdaten versorgt und somit wehrfähig bleibt.

Für einen ausfallsicheren Einsatz zu Wasser, zu Luft oder zu Land ist es dabei von Vorteil, wenn das Fahrzeug ein Luftfahrzeug, ein Landfahrzeug oder ein Wasserfahrzeug umfasst.

Bei einem Einsatz im militärischen Bereich ist es zweckmäßig, wenn das Fahrzeug ein militärisches Fahrzeug ist, das zumindest eine Waffe und zumindest ein Lageerfassungsgerät als Netzwerkteilnehmer aufweist.

Um eine maximale Zuverlässigkeit bei einem Beschuss oder bei einer Beschädigung des Fahrzeugs sicherzustellen, ist es von Vorteil, wenn eine von der datenübertragenden Ring-Verkabelung umgrenzte Minimalfläche größer als 20% einer maximalen Querschnittsfläche des Fahrzeugkörpers ist.

Bei einem Beschuss oder einer Beschädigung durch einen Luftangriff ist es besonders von Vorteil, wenn eine von der datenübertragenden Ring-Verkabelung umgrenzte Minimalfläche größer als 20% einer maximalen Querschnittsfläche des Fahrzeugkörpers parallel zur Horizontalen ist.

Um die Zerstörung eines Großteils der erfindungsgemäßen Daten übertragenden Ring-Verkabelung auszuschließen, ist es zweckmäßig, wenn die von der datenübertragenden Ring-Verkabelung umgrenzte Minimalfläche größer als 5 m² ist.

Für eine weitere Redundanz und Reduzierung von "Single-Points-of-Failure" ist es von Vorteil, wenn das Datenübertragungsnetzwerk zumindest zwei datenübertragende Ring-Verkabelungen aufweist.

Für eine maximierte Ausfallsicherheit des erfindungsgemäßen Datenübertragungsnetzwerkes ist es besonders vorteilhaft, wenn in vergleichbarer Weise zu dem World Wide Web die datenübertragenden Ring-Verkabelungen eine Netz-Verkabelung bilden.

Um separierte Netzwerksegmente mit unterschiedlichen Sicherheitsanforderungen oder Einsatzdauern vorsehen zu können, ist es von Vorteil, wenn zumindest zwei der datenübertragenden Ring-Verkabelungen separat ausgebildet und über eine Verbindungseinrichtung jeweils entkoppelbar miteinander verbunden sind.

Hierbei ist es zweckmäßig, wenn die Verbindungseinrichtung die datenübertragenden separaten Ring-Verkabelungen in redundanter Weise miteinander koppelt.

Um bei einer großen Ausdehnung des erfindungsgemäßen Datenübertragungsnetzwerks Probleme aufgrund von Kabellängen zu vermeiden, ist es zweckmäßig, wenn die datenübertragende Ring-Verkabelung ein Glasfaserkabel oder eine Twisted-Pair-Leitung umfasst.

Für die Bereitstellung einer exakten Zeitsynchronisation mit hoher Ausfallsicherheit ist es von Vorteil, wenn das Datenübertragungsnetzwerk zur Synchronisierung der Netzwerkteilnehmer geeignet ist.

Für eine optimale Unterstützung einer bi-direktionalen und Vollduplex-Kommunikation zwischen zwei Netzwerkknoten ist es von Vorteil, wenn das Datenübertragungsnetzwerk zur Ethernet-basierten Datenübertragung mittels eines HSR-PRP-Protokolls geeignet ist.

Für eine gleichzeitige Ausfallsicherheit der Stromversorgung der Netzwerkteilnehmer des erfindungsgemäßen Datenübertragungsnetzwerks ist es zweckmäßig, wenn das Fahrzeug eine stromversorgende Ring-Verkabelung zur Versorgung der Netzwerkteilnehmer der datenübertragenden Ring-Verkabelung mit Energie aufweist.

Für eine universelle Anwendung von Geräten des erfindungsgemäßen Fahrzeugs ist es zweckmäßig, wenn die Netzwerkteilnehmer zumindest eine Vorrichtung aufweisen, die aus einer Gruppe ausgewählt ist, die ein Waffenkontrollsystem, ein integriertes Plattform-Management-System, ein integriertes Überwachungs- und Kontrollsystem für Helikopter, ein Entmagnetisierungssystem, einen Kreiselkompass, einen magnetischen Kompass oder einen GPS/GLONASS-Empfänger, einen EM-Log, einen Doppler-Log, ein Echogerät, ein automatisches Identifizierungssystem AIS, ein integriertes Kontroll- und Überwachungssystem ICMS, ein Sonar-Gerät, ein Periskop-System, eine Wetterstation, ein Radar, ein Kommunikationssystem, eine Freund- oder Feind-Erkennung IFF, ein Elektronikunterstützungsgerät, einen Repeater oder eine Leitwerk-Stabilisierung umfasst.

Die Erfindung wird im Folgenden mit Bezug auf die Figuren in beispielhafter Weise im Detail beschrieben. Der Gegenstand der Erfindung wird durch die Ansprüche definiert. Es zeigen:
- Figur 1: ein schematisches Blockschaltbild eines Fahrzeugs mit ausfallsicherer interner Datenübertragung gemäß der vorliegenden Erfindung;
- Figur 2A bis 2C: schematische Darstellungen von Ausführungsformen eines Fahrzeugs mit einer Waffe und einem Lageerfassungsgerät gemäß der vorliegenden Erfindung;
- Figur 3A und 3B: eine schematische perspektivische Ansicht sowie eine Querschnittsansicht entlang der Ebene AA' eines als Wasserfahrzeug ausgebildeten Fahrzeugs mit ausfallsicherer interner Datenübertragung gemäß der vorliegenden Erfindung;
- Figur 4A und 4B: schematische Blockschaltbilder eines kabelgebundenen Datenübertragungsnetzwerks mit und ohne Fehlstelle in der Ring-Verkabelung gemäß einem Ausführungsbeispiel der vorliegenden Erfindung;
- Figur 5: eine schematische Detailansicht eines Netzwerkknotens in einem Datenübertragungsnetzwerk gemäß einem Ausführungsbeispiel der vorliegenden Erfindung;
- Figur 6: ein schematisches Blockschaltbild eines Datenübertragungsnetzwerks mit zumindest zwei separaten Daten übertragenden Ring-Verkabelungen gemäß einem Ausführungsbeispiel der vorliegenden Erfindung; und
- Figur 7A und 7B: schematische Blockschaltbilder eines erfindungsgemäßen kabelgebundenen Datenübertragungsnetzwerks mit und ohne Fehlstelle, wobei die Netzwerkteilnehmer der Daten übertragenden Ring-Verkabelung durch eine Strom versorgende RingVerkabelung mit Energie versorgt werden.

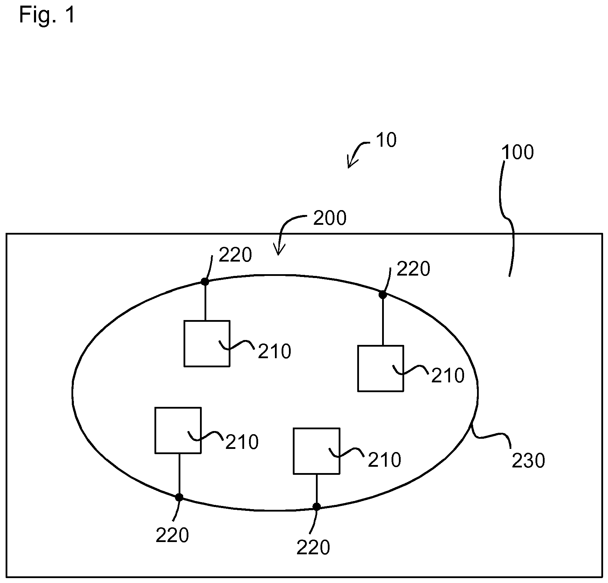

Figur 1 zeigt ein schematisches Blockschaltbild eines Fahrzeugs 10 mit ausfallsicherer interner Datenübertragung gemäß einem Ausführungsbeispiel der Erfindung. Das Fahrzeug 10 weist einen Fahrzeugkörper 100 und ein am Fahrzeugkörper 100 vorgesehenes, kabelgebundenes Datenübertragungsnetzwerk 200 auf. An dem Fahrzeugkörper 100 sind ferner Netzwerkteilnehmer 210 vorgesehen, die über Netzwerkknoten 220 des Datenübertragungsnetzwerks 200 jeweils miteinander verbunden sind. Erfindungsgemäß weist das Datenübertragungsnetzwerk 200 eine datenübertragende Ring-Verkabelung 230 auf.

Bei Datenübertragungsnetzwerken und insbesondere Computernetzwerken sind die folgenden grundlegenden Netzwerk-Topologien, also die topologische Struktur eines Computernetzwerks bekannt.

Bei einem Sternnetz oder einer Stern-Topologie werden die einzelnen Netzwerkteilnehmer mit einem zentralen Knoten jeweils sternförmig verbunden, wobei eine Kommunikation der Netzwerkteilnehmer über einen sogenannten Netzwerk-Switch erfolgt. Dieses sogenannte Sternnetzwerk weist jedoch den Nachteil auf, dass bei einem Ausfall des zentralen Netzwerkknotens das gesamte Netzwerk ausfällt. Darüber hinaus kann es zu einer Überlastung des zentralen Netzwerkknotens bei zu vielen Sendewünschen der an der Netzwerkkommunikation teilnehmenden Netzwerkteilnehmer führen.

Bei einem sogenannten Busnetz sind alle Teilnehmer über kurze Leitungen an einem gemeinsamen Datenübertragungsmedium, dem sogenannten Bus, angeschlossen. Hierbei werden Daten über ein passives Medium ohne zentrale Koordinierungsfunktion übertragen, wobei der Ausfall eines Teilnehmers keine Auswirkungen auf die Kommunikation der restlichen Netzwerkteilnehmer hat. Bei einer Beschädigung der Bus-Verkabelung kommt es jedoch zur Trennung der Netzwerkteilnehmer aufgrund der Fehlstelle in dem Busnetzwerk.

Bei einem sogenannten Baumnetzwerk liegt eine hierarchische Verbindung zwischen den einzelnen Netzwerkknoten vor, wobei die Kommunikation zwischen den jeweiligen Netzwerkknoten einer hierarchischen Ebene stets über den sogenannten Wurzelknoten erfolgt.

Bei einem Ringnetz oder Schleifennetz ist jeder Netzwerkteilnehmer genau mit einem Vorgänger und einem Nachfolger verbunden.

Die Regelung des Sendens erfolgt auf Basis des sogenannten Token-Verfahrens. Token-Ring ist eine Vernetzungstechnik für Computernetzwerke, die in der Spezifikation IEEE 802.5 festgelegt ist. Die logische Topologie von Token-Ring ist ein Ring. Hierbei kreist ein sogenannter Token bei Token-Ring-Netzen über den Ring. Das Token wird stets von einem Knoten an den nächsten weitergereicht. Selbst im Leerlauf geben die Stationen das Paket fortwährend weiter. Möchte nun ein Netzwerkteilnehmer Daten versenden, wartet er, bis das Token ihn erreicht hat, dann hängt er seine Nutzdaten daran. Zugleich ergänzt er das Token um Steuersignale und setzt außerdem das Token-Bit von Null (für ein freies Token) auf Eins, aus dem Frei-Token wird also ein Datenrahmen. Nach dem Vorgang setzt der Computer den Datenrahmen wieder auf den Ring, wo dieser genau wie das Frei-Token zuvor von den einzelnen Knoten weitergereicht wird. Jeder Rechner prüft, ob das Paket an ihn adressiert ist, und setzt es andernfalls zurück auf den Ring. Erhält der vorgesehene Netzwerkteilnehmer den an ihn adressierten Datenrahmen, kopiert er die Nutzdaten und quittiert den Datenempfang. Der Sender erhält die Quittung und sendet das Token mit den nächsten Nutzdaten oder setzt ein Frei-Token auf den Ring. Dabei darf ein Sender das Token nur eine bestimmte Zeit für sich in Anspruch nehmen, bevor er es wieder freigeben muss. Dadurch wird jedem Knoten in einem Ring garantiert, dass er nach Ablauf dieser festgelegten Zeit ("Token Holding Time") in einem Ring senden darf.

Eine Weiterentwicklung einer Ring- oder Schleifentopologie bei Ethernet-basierten Netzwerken ist eine "High Available Seamless Redundancy" (HSR) oder "Parallel Redundant Protocol (PRP)"-Datenübertragungsarchitektur, welche durch den Standard IEC 62439-3 Clause 5 bzw. Clause 4 definiert ist. Bei einer HSR/PRP-Datenübertragungsarchitektur muss der Netzwerkteilnehmer bei einer Versendung von Nachrichten über zwei parallele Netzwerke keine Duplikate herausfiltern, da dies effizient in der Hardware realisiert und verwaltet wird. Das Datenübertragungsnetzwerk mit einer datenübertragenden Ring-Verkabelung 230 kann dabei Standard Ethernet-Komponenten oder Standard Gigabit-Ethernet-Komponenten aufweisen. Die Kommunikation zwischen zwei Netzwerkknoten 220 erfolgt bi-direktional und Voll-Duplex. Somit ist nur ein Kabel zwischen zwei Netzwerkknoten 220 notwendig. Die Daten werden von dem sendenden Netzwercknoten 220 in beide Richtungen ausgesendet und beim Empfang derselben Daten wieder gelöscht.

Erfindungsgemäß ist nun ein Fahrzeug 10 vorgesehen, welches ein Datenübertragungsnetzwerk 200 mit einer Ring- oder Schleifentopologie aufweist. Dabei kann das Datenübertragungsnetzwerk 200 zur Ethernet-basierten Datenübertragung mittels eines oben beschriebenen HSR-PRP-Protokolls geeignet sein.

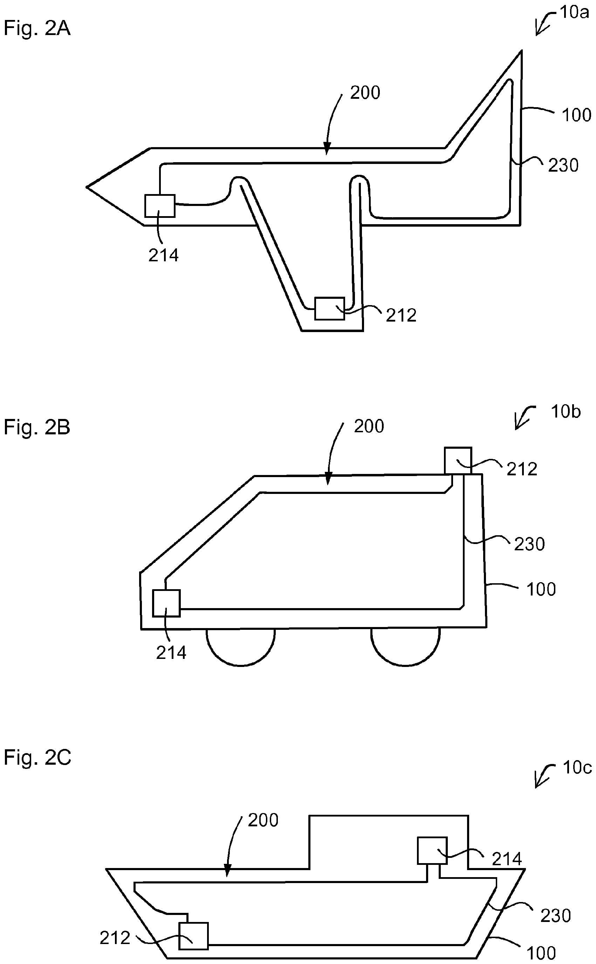

Wie in den Figuren 2A bis 2C gezeigt ist, kann das Fahrzeug 10 entweder ein Luftfahrzeug 10a (siehe Figur 2A), ein Landfahrzeug 10b (siehe Figur 2B) oder ein Wasserfahrzeug 10c (siehe Figur 2C) umfassen. Das Fahrzeug 10 kann dabei ein Luftfahrzeug 10a, ein Landfahrzeug 10b, ein Wasserfahrzeug 10c oder eine Mischform aus den vorgenannten Fahrzeugen sein. So kann das Fahrzeug 10 beispielsweise auch ein Wasserflugzeug oder ein Amphibienfahrzeug sein. Unter Fahrzeug 10 soll also allgemein eine mobile Plattform verstanden werden, welche nicht ortsfest ist, sondern selbsttätig seinen Aufenthaltsort ändern kann.

In den Figuren 2A bis 2C ist das Fahrzeug 10 insbesondere als ein militärisches Fahrzeug 10a bis 10c dargestellt, das zumindest eine Waffe 212 und zumindest einen Lageerfassungsgerät 214 als Netzwerkteilnehmer 210 aufweist. Die ständige, aktuelle Verfügbarkeit von Navigationsdaten aller Geräte, insbesondere des Waffensystems, ist bei militärischen Fahrzeugen, insbesondere Schiffen und U-Booten überlebenswichtig. Bei militärischen Fahrzeugen wird die Verfügbarkeit oder Ausfallsicherheit des Datenübertragungsnetzwerks 200 extrem herausgefordert, da in einem militärischen Einsatz in der Regel auch ein Beschuss durch feindliche Fahrzeuge stattfindet. Somit ist eine Fehlstelle in der Daten übertragenden Ring-Verkabelung 230 nicht ein unwahrscheinliches Ereignis, sondern kann jederzeit bei einem Treffer des Fahrzeugs 10 auftreten. Da ein Ausfall des Waffensystems 212 aufgrund von dem Fehlen von empfangenen Navigationsdaten oder anderen relevanten Daten die Wehrhaftigkeit und damit die Überlebensfähigkeit des Fahrzeugs 10 massiv beeinträchtigt, weist das Datenübertragungsnetzwerk 200 erfindungsgemäß eine Daten übertragende Ring-Verkabelung 230 auf, welche bei einer Fehlstelle innerhalb der Daten übertragenden Ring-Verkabelung 230 nach wie vor eine Kommunikation der Waffe 212 mit dem gezeigten Lageerfassungsgerät 214 ermöglicht.

Die in den Figuren 2A bis 2C gezeigten Netzwerkteilnehmer, insbesondere die Waffe 212 und das Lagererfassungsgerät 214 sollen als Ausführungsbeispiele für Netzwerkteilnehmer 210 des Fahrzeugs 10 aufgefasst werden. Bei einer Ausgestaltung des Fahrzeugs 10 als Schiff oder U-Boot oder als Helikopter können eine Vielzahl von weiteren Netzwerkteilnehmern 210 eingesetzt werden.

So können die Netzwerkteilnehmer 210 zumindest eine Vorrichtung aufweisen, die aus einer Gruppe ausgewählt ist, die ein Waffenkontrollsystem, ein integriertes Plattform-Management-System, ein integriertes Überwachungs- und Kontrollsystem für Helikopter, ein Entmagnetisierungssystem, einen Kreiselkompass, einen magnetischen Kompass oder einen GPS/GLONASS-Empfänger, einen EM-Log, einen Doppler-Log, ein Echogerät, ein automatisches Identifizierungssystem AIS, ein integriertes Kontroll- und Überwachungssystem ICMS, ein Sonar-Gerät, ein Periskop-System, eine Wetterstation, ein Radar, ein Kommunikationssystem, eine Freund- oder Feind-Erkennung IFF, ein Elektronikunterstützungsgerät, einen Repeater oder eine Leitwerk-Stabilisierung umfasst. Das Fahrzeug 10 kann also als Netzwerkteilnehmer 210 zumindest eines der vorgenannten Geräte aufweisen.

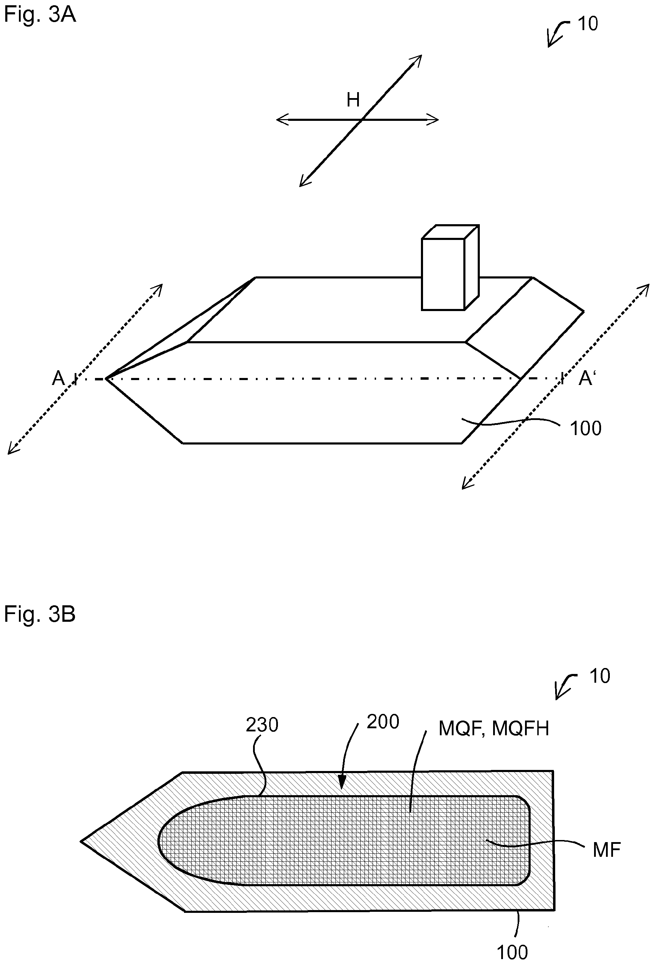

Für eine Maximierung der Ausfallsicherheit der Ring-Verkabelung 230 ist jedoch nicht nur das bloße Vorsehen einer Ring-Architektur maßgeblich, sondern auch die wirkliche reale Topologie der Ring-Verkabelung 230. Dies soll anhand der Figuren 3A und 3B illustriert werden.

Figur 3A zeigt eine schematische perspektivische Ansicht eines Fahrzeugs 10, welches als Wasserfahrzeug 10C ausgestaltet ist. Insbesondere kann das Wasserfahrzeug 10C ein Schiff oder ein U-Boot sein. Die im Folgenden beschriebene physikalische Topologie der datenübertragenden Ring-Verkabelung 230 soll jedoch nicht auf eine Anwendung bei dem gezeigten Wasserfahrzeug 10c beschränkt sein, sondern soll ebenfalls für jedes oben beschriebene Fahrzeug 10 wie ein Luftfahrzeug oder ein Landfahrzeug gelten.

Die Netzwerk-Verkabelung des Datenübertragungsnetzwerks 200 bildet einen geschlossenen Ring oder Schleife und ist am Fahrzeugkörper 100 vorgesehen. Im Falle mehrerer datenübertragender Ring-Verkabelungen 230 oder im Falle der Ausbildung einer datenübertragenden Netz-Verkabelung, wie sie weiter unten beschrieben werden wird, soll als die maßgebliche datenübertragene Ring-Verkabelung 230 diejenige ausgewählt werden, welche die größte Fläche durch ihre Verkabelung umgrenzt. Als maßgebliche Fläche soll die Minimalfläche MF verwendet werden. Eine Minimalfläche ist mathematisch als eine Fläche im Raum definiert, die lokal minimalen Flächeninhalt bei einer vorgegebenen Begrenzungslinie im Raum aufweist. Derartige Formen nehmen beispielsweise Seifenhäute an, wenn sie über einen entsprechenden Rahmen wie etwa einen Blasring gespannt sind. Im einfachsten Fall, in welchem die Daten übertragende Ring-Verkabelung 230 vollständig innerhalb einer Ebene liegt, ist die Minimalfläche MF eine plane ringförmige Fläche.

Je größer die von der datenübertragenden Ring-Verkabelung 230 umgrenzte Minimalfläche MF ist, desto geringer ist die Ausfallwahrscheinlichkeit im Falle einer Fehlstelle oder einer getroffenen Stelle der Daten übertragenden Ring-Verkabelung 230. Obwohl eine beliebig große Minimalfläche MF besonders bevorzugt ist, ist diese in der Regel nicht größer als eine maximale Querschnittsfläche MQF des Fahrzeugkörpers 100. Daher ist es bevorzugt, dass eine von der Daten übertragenden Ring-Verkabelung 230 umgrenzte Minimalfläche MF größer als 20 %, größer als 30 %, größer als 40 %, größer als 50 %, größer als 60 %, größer als 70 %, größer als 80 % oder größer als 90 % einer maximalen Querschnittsfläche MQF des Fahrzeugkörpers 100 ist.

Die maximale Querschnittsfläche MQF des Fahrzeugkörpers 100 soll als eine Fläche definiert werden, welche von einer Außenhülle des Fahrzeugkörpers 100 umgrenzt ist und in einer geraden Ebene den Fahrzeugkörper 100 schneidet. Hierbei wird aus sämtlichen möglichen Querschnitten des Fahrzeugkörpers 100 die größtmögliche, also maximale Querschnittsfläche MQF ausgewählt. Die maximale Querschnittsfläche MQF muss dabei nicht stetig innerhalb des Fahrzeugkörpers 100 liegen, sondern kann, wie beispielsweise bei einem Katamaran-Wasserfahrzeug, auch eine nicht geschlossene Fläche bilden. So setzt sich beispielsweise bei einem horizontalen Querschnitt eines Katamarans die maximale Querschnittsfläche MQF aus zwei separaten Querschnittsflächen zusammen, die innerhalb der zwei Rümpfe des Katamarans liegen.

In einer weiter bevorzugten Ausführungsform ist eine von der Daten übertragenden Ring-Verkabelung 230 umgrenzte Minimalfläche MF größer als 20 %, größer als 30 %, größer als 40 %, größer als 50 %, größer als 60 &, größer als 70 %, größer als 80 % oder größer als 90 % einer maximalen Querschnittsfläche MQFH des Fahrzeugkörpers 100 parallel zur Horizontalen H. Die Horizontale H ist in Figur 3A illustriert und ist als eine Ebene definiert, welche senkrecht auf einem Lot in Richtung der Schwerkraft steht. Bei einem Wasserfahrzeug 10c ist die Horizontale H beispielsweise parallel zur Wasseroberfläche. Bei einem Landfahrzeug 10b soll die Horizontale H als eine von den drei oder vier Rädern aufgespannte Ebene definiert sein. Bei einem Luftfahrzeug 10a soll die horizontale Ebene H als parallel zur Ebene der Lufttragflächen des Luftfahrzeugs 10a definiert sein. Die Verwendung einer maximalen Querschnittsfläche MQFH des Fahrzeugkörpers 100 parallel zur Horizontalen H als Vergleichsgröße zur von der Daten übertragenden Ring-Verkabelung 230 umgrenzten Minimalfläche MF ist besonders zweckmäßig, wenn die von der Daten übertragenden Ring-Verkabelung 230 umgrenzte Minimalfläche MF selbst im Wesentlichen eine zur Horizontalen H parallele Fläche bildet.

Bei der in Figur 3B durch den Querschnitt AA' gezeigten maximale Querschnittsfläche MQF des Fahrzeugkörpers 100 ist gleichzeitig auch die maximale Querschnittsfläche MQFH parallel zur Horizontalen H. Im Falle eines Angriffs aus der Luft ist es dabei zweckmäßig, wenn die von der Daten übertragenden Ring-Verkabelung 230 umgrenzte Minimalfläche MF im Wesentlichen parallel zur Horizontalen und größer als 20 %, 30 %, 40 %, 50 %, 60 %, 70 %, 80 % oder 90 % einer maximalen Querschnittsfläche MQFH des Fahrzeugkörpers 100 parallel zur Horizontalen H ist.

Bei der Verwendung einer Misch-Topologie, also einer Kombination aus verschiedenen Netzwerktypen wie einem Bus-Netzwerk, einem Stern-Netzwerk und einem Ring-Netzwerk können die Netzwerkteilnehmer auch zunächst sternförmig mit dem Netzwerkknoten 220 verbunden sein, welche in der datenübertragenden Ring-Verkabelung 230 vorgesehen sind. Bei dieser Misch-Topologie ist es jedoch zweckmäßig, wenn die datenübertragende Ring-Verkabelung 230 nicht durch einen einzigen Treffer zerstört werden kann. Somit kann die von der Daten übertragenden Ring-Verkabelung 230 umgrenzte Minimalfläche MF größer als 5 m², größer als 7 m², größer als 10 m², größer als 15 m², größer als 20 m², größer als 25 m², größer als 30 m², größer als 50 m², größer als 100 m², größer als 200 m² oder größer als 500 m² sein.

Durch das Vorsehen einer Minimalfläche MF mit einer bestimmten Mindestgröße wird die Ausfallsicherheit bei einem Treffer eines Teils des Fahrzeugs 10 maßgeblich reduziert. Hierfür kann beispielsweise die Ring-Verkabelung 230 entlang eines Randbereichs des Fahrzeugs 10 geführt werden, um die eingeschlossene Minimalfläche MF zu maximieren.

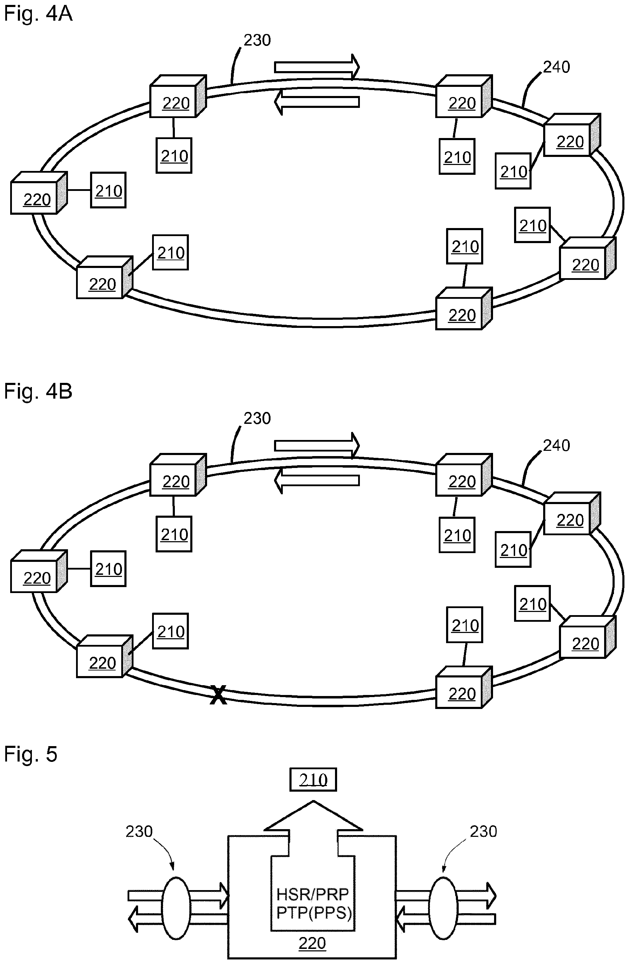

Figur 4A und 4B zeigen ein schematisches Blockschaltbild eines Ausführungsbeispiels des Datenübertragungsnetzwerks 200. Figur 5 zeigt eine Detailansicht eines Netzwerkknotens 220 des in den Figuren 4A und 4B gezeigten Datenübertragungsnetzwerks 200.

Die oben beschriebenen Netzwerkteilnehmer 210 sind mit der datenübertragenden Ring-Verkabelung 230 über Netzwerkknoten 220 verbunden. In einer bevorzugten Ausführungsform ist das Datenübertragungsnetzwerk 200 Ethernet-basiert, wobei die Daten mittels eines HSR-PRP-Protokolls übertragen werden. "High Available Seamless Redundancy" (HSR) ist ein Netzwerkprotokoll für Ethernet, welches eine nahtlose Ausfallsicherung gegen einen Fehler einer beliebigen Netzwerkkomponente bereitstellt. HSR-Netzwerkknoten weisen zwei Ports auf und agieren als ein Switch (Brücke), welcher deren Verwendung innerhalb eines Rings oder einer Netzstruktur ermöglicht, ohne zugewiesene Switches (dedicated switches) zu verwenden. Ein HSR-Netzwerkknoten 220 weist zumindest zwei Ethernet-Ports auf, welche jeweils mit einem Nachbar-HSR-Netzwerkknoten 220 verbunden sind, so dass jederzeit zwei Pfade zwischen zwei Knoten bestehen. Daher, solange ein Pfad im Betrieb ist, empfängt die Zielanwendung jederzeit einen Datenrahmen. Die HSR-Netzwerkknoten 220 prüfen kontinuierlich die Redundanz, um versteckte Fehler aufzudecken. Bei der Verwendung eines HSR-Rings als Datenübertragungsnetzwerk 200 entfallen die zusätzlichen Netzwerk-Switches, welche bei einer Stern-Topologie nötig sind, welche über das Schiff verteilt installiert, konfiguriert und gewartet werden müssen.

Der HSR-Ring ist für eine maximale Knotenanzahl von 512 ausgelegt, was für eine Navigationsdatenverteilung ausreichend ist. Da sowohl Standard-Twisted-Pair-Leitungen (CAT6) als auch Glasfaserkabel verwendet werden können, gibt es für die Vernetzung des Fahrzeugs 10, insbesondere für die Schiffvernetzung keine Längenprobleme. Durch die Verwendung von Standard-Gigabit-Ethernet-Komponenten sind gute Testbarkeit und kurze Übertragungszeiten gewährleistet. Die Ring-Verdrahtung 230 muss nur einmal installiert werden. Die Netzwerkknoten 220 können an geeigneten Stellen in die datenübertragende Ring-Verkabelung 230 integriert werden und somit nahe an den als Sensoren oder Aktoren ausgestalteten Netzwerkteilnehmern 210 platziert werden. In den Netzwerkknoten 220 können Schnittstellen-Wandler oder Rechner integriert werden.

Wie in Fig. 4B gezeigt, führt eine Leitungs-/Kabel-Unterbrechung nicht zum Datenverlust, da durch das gegenläufige Aussenden der Daten in beide Richtungen des Ringes der datenübertragenden Ring-Verkabelung 230 die Daten an jeden Netzwerkknoten 220 gelangen. Ebenso verhält es sich mit dem Ausfall eines Netzwerkknotens 220.

Eine exakte Zeitsynchronisation an Bord des Fahrzeugs 10 ist elementar, um asynchrone Ereignisse zeitlich richtig zuzuordnen. Das "Network Time Protocol" (NTP) lässt nur eine Synchronisation im Bereich von Millisekunden zu, die aber für einige spezielle Anwendungen nicht genau genug sind. Deshalb mussten in bekannten Fahrzeugen wie Schiffen und U-Booten zusätzliche Synchronisationsleitungen verlegt werden. Durch die Verwendung einer Synchronisation der Uhrzeit an Bord des Fahrzeugs 10 mittels "Precise Time Protocol" (PTP) nach IEEE 1588 v2 in Verbindung mit HSR, also unter Verwendung eines HSR/PTP-Protokolls (Figur 5), können die Synchronisationsleitungen entfallen. Gleichzeitig ist eine Synchronisation im Nanosekundenbereich möglich. Daher kann also das Datenübertragungsnetzwerk 200 zur Synchronisierung der Netzwerkteilnehmer 210 geeignet sein.

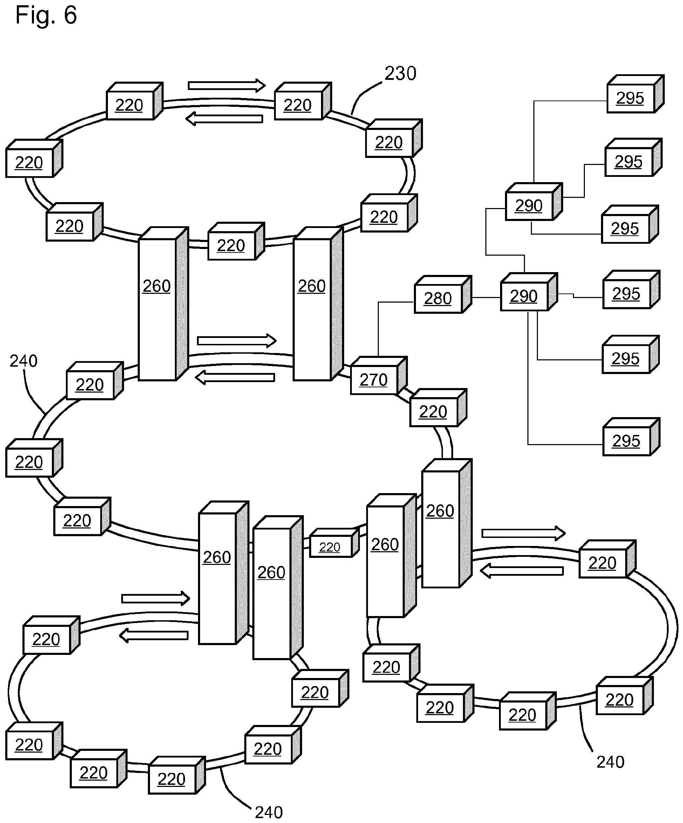

In den vorstehend beschriebenen Ausführungsbeispielen wurde das erfindungsgemäße Datenübertragungsnetzwerk 200 mit einer datenübertragenden Ring-Verkabelung 230 beschrieben. Es ist jedoch auch möglich, dass das Datenübertragungsnetzwerk 200 zumindest zwei datenübertragende Ring-Verkabelungen aufweist. Dies ist in der Figur 6 illustriert. Hierbei können die datenübertragenden Ring-Verkabelungen 230, 240 eine Netz-Verkabelung mit einem gemeinsamen Verkabelungsabschnitt bilden, oder zumindest zwei der datenübertragenden Ring-Verkabelungen 230, 240 können auch separat ausgebildet und über eine Verbindungseinrichtung 260 jeweils entkoppelbar miteinander verbunden sein.

In Figur 6 ist eine Separierung der Daten übertragenden Ring-Verkabelungen 230, 240 dargestellt. Unter Verwendung des HSR/PRP-Protokolls ist es möglich, verschiedene Netzwerksegmente miteinander zu koppeln bzw. zu entkoppeln. Hierbei kann die Verbindungseinrichtung 260 die datenübertragenden separaten Ring-Verkabelungen 230, 240 in redundanter Weise miteinander koppeln. Bei der Verwendung eines HSR-Rings werden sogenannte "QuadBoxes" als Verbindungseinrichtungen 260 eingesetzt, durch die die entsprechenden HSR-Ringe miteinander redundant gekoppelt werden. Zusätzlich können für eine Koppelung von zwei separaten Ring-Verkabelungen 230, 240 jeweils zwei QuadBoxes als Verbindungseinrichtung 260 verwendet werden, um eine zusätzliche Redundanz in der Kopplung der Daten übertragenden Ring-Verkabelungen 230, 240 zu erreichen.

Eine Separierung der einzelnen als HSR-Ring ausgestalteten separaten datenübertragenden Ring-Verkabelungen 230, 240 ist auch sinnvoll, da alle als "Dual-Attached-Nodes" (DAN) ausgebildete Netzwerkknoten 220 an einem Ring möglichst gleichzeitig mit Strom versorgt werden sollten. Über zusätzliche Router/Firewalls können unterschiedliche Netzwerke auch bezüglich ihrer Sicherheitsanforderungen entkoppelt werden. Hierbei ist es möglich, bestehende Netzwerkkomponenten zu integrieren. Diese können über eine sogenannte RedBox (Redundancy Box) 270 an die Daten übertragende Ring-Verkabelung 240 oder 230 angeschlossen werden. Netzwerkkomponenten, die nur einen Netzwerkanschluss besitzen, werden als SAN (Single Attached Node) bezeichnet. Bei dem in Figur 6 gezeigten Ausführungsbeispiel ist ein bekanntes Ethernet-Netzwerk mit einem Router/Firewall 280, zwei Switches 290 und Netzwerkanschlüssen 295 gezeigt, die als Ethernet-SAN ausgebildet sind. Das PRP/HSR-Protokoll ist ein Layer 2-Protokoll. Somit können beliebige, vorhandene Layer 3- und Layer 4-Protokolle wie beispielsweise TCP/IP über das erfindungsgemäße Datenübertragungsnetzwerk 200 auf Basis von HSR/PRP-Ringen übertragen werden. Darüber hinaus ist die Verwendung von einem Virtual Local Area Network (VLAN) innerhalb des Navigationssegments mit HSR/PRP möglich und erhöht die Datensicherheit. Die statische Konfigurierung der Netzwerkteilnehmer 210 ist auf Fahrzeugen 10, insbesondere militärischen Fahrzeugen 10, und insbesondere auf Schiffen und U-Booten von Vorteil, um eine potenzielle Gefährdung zu minimieren.

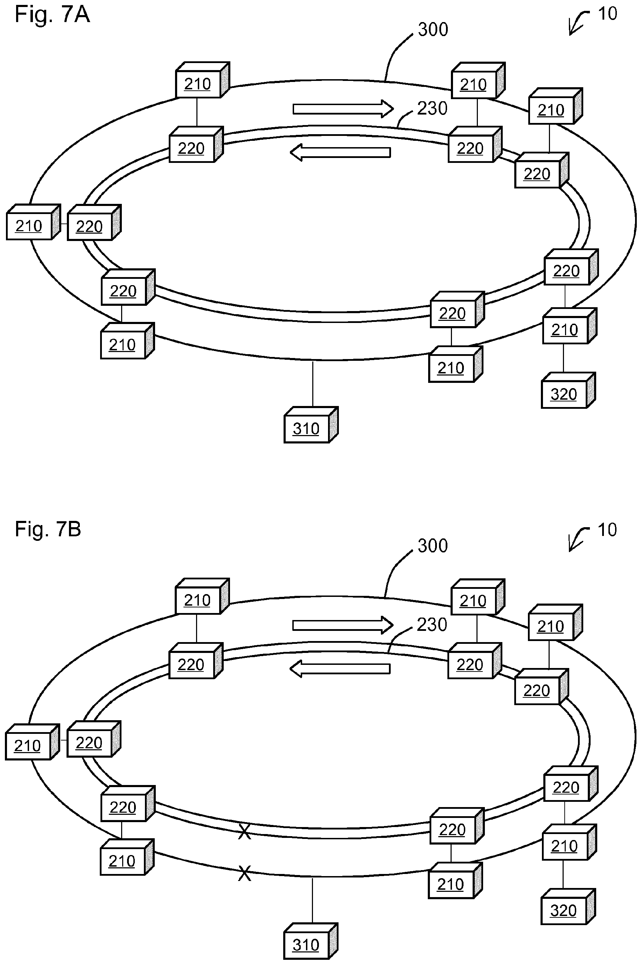

Wie in den Figuren 7A und 7B gezeigt, kann das Fahrzeug 10 ferner eine stromversorgende Ring-Verkabelung 300 zur Versorgung der Netzwerkteilnehmer 210 der datenübertragenden Ring-Verkabelung 230 mit Energie aufweisen. Die Ausfallsicherheit der stromversorgenden Ring-Verkabelung 300 ist ebenfalls durch das Vorsehen einer Ring-Topologie gegeben, so dass bei einer Fehlstelle (Figur 7B) der Strom von einer Stromquelle 310 durch das Aussenden des Stroms in beide Richtungen des Ringes 300 an sämtliche Netzwerkteilnehmer 310 gelangt. Um die Ausfallsicherheit noch weiter zu erhöhen, können separat für besonders relevante oder alle Netzwerkteilnehmer 210 eigene Stromquellen 320 wie beispielsweise eine Batterie oder ein Notstromaggregat vorgesehen sein.

Erfindungsgemäß ist also ein hoch verfügbares Navigationsnetzwerk für Fahrzeuge, insbesondere für Schiffe und U-Boote vorgesehen. Das Ziel der Erfindung ist ein gesicherter Empfang von Daten von allen Netzwerkteilnehmern 210 des Fahrzeugs 10. Bei Schiffen und U-Booten müssen Daten gesammelt, plausibilisiert und verteilt werden. So muss beispielsweise ein Tiefensensor die Information besitzen, in welche Richtung er die Tiefe ermittelt. Ferner benötigt ein Radarsensor entsprechende Navigationsdaten. Waffensysteme müssen in einem Bruchteil von Sekunden reagieren, um ihre Wehrhaftigkeit zu behalten.

Gemäß dem IEC-Standard IEC62439-3 wurden Ring-Topologien in Datenübertragungsnetzwerken in Umschaltwerken verwendet, jedoch wurden hier Misch-Topologien eingesetzt, bei welchen der HSR-Ring innerhalb eines Schaltschrankes mit sternförmig verbundenen Netzwerkteilnehmern verbunden ist. Eine Anwendung der oben beschriebenen HSR-Datenübertragungsarchitektur auf Fahrzeuge, insbesondere militärische Fahrzeuge, führt zu einer erhöhten Ausfallsicherheit und Zuverlässigkeit sowie Verfügbarkeit des erfindungsgemäßen Datenübertragungsnetzwerkes innerhalb des Fahrzeugs und ist daher insbesondere bei einem militärischen Einsatz von großem Vorteil.

## Patentansprüche

1. Fahrzeug (10) mit ausfallsicherer interner Datenübertragung, mit
- einem Fahrzeugkörper (100);
- einem am Fahrzeugkörper (100) vorgesehenen, kabelgebundenen Datenübertragungsnetzwerk (200); und
- am Fahrzeugkörper (100) vorgesehenen Netzwerkteilnehmern (210), die über Netzwerkknoten (220) des Datenübertragungsnetzwerks (200) jeweils miteinander verbunden sind, wobei das Datenübertragungsnetzwerk (200) eine datenübertragende Ring-Verkabelung (230) aufweist,
**dadurch gekennzeichnet, dass**
eine von der datenübertragenden Ring-Verkabelung (230) umgrenzte Minimalfläche (MF) größer als 20% einer maximalen Querschnittsfläche (MQF) des Fahrzeugkörpers (100) ist.

2. Fahrzeug (10) nach Anspruch 1, **dadurch gekennzeichnet, dass** das Fahrzeug (10) ein Luftfahrzeug (10a), ein Landfahrzeug (10b) oder ein Wasserfahrzeug (10c) umfasst.

3. Fahrzeug (10) nach Anspruch 1 oder 2, **dadurch gekennzeichnet, dass** das Fahrzeug (10) ein militärisches Fahrzeug (10a, 10b, 10c) ist, das zumindest eine Waffe (212) und zumindest ein Lageerfassungsgerät (214) als Netzwerkteilnehmer (210) aufweist.

4. Fahrzeug (10) nach einem der vorstehenden Ansprüche, **dadurch gekennzeichnet, dass** eine von der datenübertragenden Ring-Verkabelung (230) umgrenzte Minimalfläche (MF) größer als 20% einer maximalen Querschnittsfläche (MQFH) des Fahrzeugkörpers (100) parallel zur Horizontalen (H) ist.

5. Fahrzeug (10) nach einem der vorstehenden Ansprüche, **dadurch gekennzeichnet, dass** die von der datenübertragenden Ring-Verkabelung (230) umgrenzte Minimalfläche (MF) größer als 5 m² ist.

6. Fahrzeug (10) nach einem der vorstehenden Ansprüche, **dadurch gekennzeichnet, dass** das Datenübertragungsnetzwerk (200) zumindest zwei gegenläufige, datenübertragende Ring-Verkabelungen (230, 240) aufweist.

7. Fahrzeug (10) nach Anspruch 6, **dadurch gekennzeichnet, dass** die datenübertragenden Ring-Verkabelungen (230, 240) eine Netz-Verkabelung bilden.

8. Fahrzeug (10) nach Anspruch 6, **dadurch gekennzeichnet, dass** zumindest zwei der datenübertragenden Ring-Verkabelungen separat ausgebildet und über eine Verbindungseinrichtung (260) jeweils entkoppelbar miteinander verbunden sind.

9. Fahrzeug (10) nach Anspruch 8, **dadurch gekennzeichnet, dass** die Verbindungseinrichtung (260) die datenübertragenden separaten Ring-Verkabelungen (230, 240) in redundanter Weise miteinander koppelt.

10. Fahrzeug (10) nach einem der vorstehenden Ansprüche, **dadurch gekennzeichnet, dass** die datenübertragende Ring-Verkabelung (230) ein Glasfaserkabel oder eine Twisted-Pair-Leitung umfasst.

11. Fahrzeug (10) nach einem der vorstehenden Ansprüche, **dadurch gekennzeichnet, dass** das Datenübertragungsnetzwerk (200) zur Synchronisierung der Netzwerkteilnehmer (210) geeignet ist.

12. Fahrzeug (10) nach einem der vorstehenden Ansprüche, **dadurch gekennzeichnet, dass** das Datenübertragungsnetzwerk (200) zur Ethernet-basierten Datenübertragung mittels eines HSR-PRP-Protokolls geeignet ist.

13. Fahrzeug (10) nach einem der vorstehenden Ansprüche, ferner mit einer stromversorgenden Ring-Verkabelung (300) zur Versorgung der Netzwerkteilnehmer (210) der datenübertragenden Ring-Verkabelung (230) mit Energie.

14. Fahrzeug (10) nach einem der vorstehenden Ansprüche, **dadurch gekennzeichnet, dass** die Netzwerkteilnehmer (210) zumindest eine Vorrichtung aufweisen, die aus einer Gruppe ausgewählt ist, die ein Waffenkontrollsystem, ein integriertes Plattform-Management-System, ein integriertes Überwachungs- und Kontrollsystem für Helikopter, ein Entmagnetisierungssystem, einen Kreiselkompass, einen magnetischen Kompass oder einen GPS/GLONASS-Empfänger, einen EM-Log, einen Doppler-Log, ein Echogerät, ein automatisches Identifizierungssystem AIS, ein integriertes Kontroll- und Überwachungssystem ICMS, ein Sonar-Gerät, ein Periskop-System, eine Wetterstation, ein Radar, ein Kommunikationssystem, eine Freund- oder Feind-Erkennung IFF, ein Elektronikunterstützungsgerät, einen Repeater oder eine Leitwerk-Stabilisierung umfasst.

## Claims

1. A vehicle (10) having fail-safe internal data transfer, comprising:
- a vehicle body (100);
- a wired data transfer network (200) provided on the vehicle body (100); and
- network subscribers (210) provided on the vehicle body (100), which are connected to one another via network nodes (220) of the data transfer network (200), wherein the data transfer network (200) has a data-transferring ring wiring (230),
**characterized in that**
a minimum area (MF) defined by the data-transferring ring wiring (230) is larger than 20% of a maximum cross-sectional area (MQF) of the vehicle body (100).

2. The vehicle (10) according to claim 1, **characterized in that** the vehicle (10) comprises an air vehicle (10a), a land vehicle (10b) or a water vehicle (10c).

3. The vehicle (10) according to claim 1 or 2, **characterized in that** the vehicle (10) comprises a military vehicle (10a, 10b, 10c), which has at least one weapon (212) and at least one position detection device (214) as network subscribers (210).

4. The vehicle (10) according to any one of the preceding claims, **characterized in that** a minimum area (MF) defined by the data-transferring ring wiring (230) is larger than 20% of a maximum cross-sectional area (MQFH) of the vehicle body (100) parallel to the horizontal (H).

5. The vehicle (10) according to any one of the preceding claims, **characterized in that** the minimum area (MF) defined by the data-transferring ring wiring (230) is larger than 5m².

6. The vehicle (10) according to any one of the preceding claims, **characterized in that** the data transfer network (200) has at least two opposite data-transferring ring wirings (230, 240).

7. The vehicle (10) according to claim 6, **characterized in that** the data-transferring ring wirings (230, 240) form a network wiring.

8. The vehicle (10) according to claim 6, **characterized in that** at least two of the data-transferring ring wirings are designed separately and, in each case, decoupleably connected to one another via a connecting means (260).

9. The vehicle (10) according to claim 8, **characterized in that** the connecting means (260) couples the data-transferring separate ring wirings (230, 240) to one another in a redundant manner.

10. The vehicle (10) according to any one of the preceding claims, **characterized in that** the data-transferring ring wiring (230) comprises a fiber optic cable or a twisted pair line.

11. The vehicle (10) according to any one of the preceding claims, **characterized in that** the data transfer network (200) is suited for synchronization of the network subscribers (210).

12. The vehicle (10) according to any one of the preceding claims, **characterized in that** the data transfer network (200) is suited for Ethernet-based data transfer by means of an HSR/PRP protocol.

13. The vehicle (10) according to any one of the preceding claims, further comprising a power supplying ring wiring (300) for supplying the network subscribers (210) of the data-transferring ring wiring (230) with energy.

14. The vehicle (10) according to any one of the preceding claims, **characterized in that** the network subscribers (210) have at least one appliance selected from a group which comprises a weapons control system, an integrated platform management system, an integrated monitoring and control system for helicopters, a demagnetizing system, a gyrocompass, a magnetic compass or a GPS/GLONASS receiver, an EM log, a Doppler log, an echo device, an automatic identification system AIS, an integrated control and monitoring system ICMS, a sonar, a periscope system, a weather station, a radar, a communication system, friend/foe identification IFF, an electronics assistance device, a repeater or empennage stabilization.

## Revendications

1. Véhicule (10) à transmission de données interne protégée contre les défaillances, avec
- un corps de véhicule (100) ;
- un réseau de transmission de données (200) câblé, prévu sur le corps de véhicule (100) ; et
- des abonnés de réseau (210) prévus sur le corps de véhicule (100), qui sont reliés respectivement les uns aux autres par l'intermédiaire de nœuds de réseau (220) du réseau de transmission de données (200), dans lequel le réseau de transmission de données (200) présente un câblage annulaire de transmission de données (230),
**caractérisé en ce que**
une surface minimale (MF) délimitée par le câblage annulaire de transmission de données (230) est supérieure à 20 % d'une surface de section transversale maximale (MQF) du corps de véhicule (100).

2. Véhicule (10) selon la revendication 1, **caractérisé en ce que** le véhicule (10) englobe un aéronef (10a), un véhicule terrestre (10b) ou un véhicule aquatique (10c).

3. Véhicule (10) selon la revendication 1 ou 2, **caractérisé en ce que** le véhicule (10) est un véhicule militaire (10a, 10b, 10c), qui présente au moins une arme (212) et au moins un appareil de détection de position (214) comme abonné de réseau (210).

4. Véhicule (10) selon l'une quelconque des revendications précédentes, **caractérisé en ce qu'**une surface minimale (MF) délimitée par le câblage annulaire de transmission de données (230) est supérieure à 20 % d'une surface de section transversale maximale (MQFH) du corps de véhicule (100) parallèle à l'horizontale (H).

5. Véhicule (10) selon l'une quelconque des revendications précédentes, **caractérisé en ce que** la surface minimale (MF) délimitée par le câblage annulaire de transmission de données (230) est supérieure à 5 m².

6. Véhicule (10) selon l'une quelconque des revendications précédentes, **caractérisé en ce que** le réseau de transmission de données (200) présente au moins deux câblages annulaires de transmission de données (230, 240) en sens contraire.

7. Véhicule (10) selon la revendication 6, **caractérisé en ce que** les câblages annulaires de transmission de données (230, 240) forment un câblage de réseau.

8. Véhicule (10) selon la revendication 6, **caractérisé en ce qu'**au moins deux des câblages annulaires de transmission de données sont réalisés séparément et sont reliés l'un à l'autre de manière à pouvoir être respectivement découplés par l'intermédiaire d'un dispositif de liaison (260).

9. Véhicule (10) selon la revendication 8, **caractérisé en ce que** le dispositif de liaison (260) accouple les câblages annulaires de transmission de données (230, 240) séparés l'un à l'autre de manière redondante.

10. Véhicule (10) selon l'une quelconque des revendications précédentes, **caractérisé en ce que** le câblage annulaire de transmission de données (230) englobe un câble à fibre optique ou une ligne à paire torsadée.

11. Véhicule (10) selon l'une quelconque des revendications précédentes, **caractérisé en ce que** le réseau de transmission de données (200) est adapté à la synchronisation des abonnés de réseau (210).

12. Véhicule (10) selon l'une quelconque des revendications précédentes, **caractérisé en ce que** le réseau de transmission de données (200) est adapté à la transmission de données basée sur Ethernet au moyen d'un protocole HSR-PRP.

13. Véhicule (10) selon l'une quelconque des revendications précédentes, en outre avec un câblage annulaire d'alimentation en courant (300) pour l'alimentation des abonnés de réseau (210) du câblage annulaire de transmission de données (230) en énergie.

14. Véhicule (10) selon l'une quelconque des revendications précédentes, **caractérisé en ce que** les abonné de réseau (210) présentent au moins un dispositif, qui est sélectionné dans un groupe qui comprend un système de contrôle d'arme, un système de gestion de plateforme intégré, un système de surveillance et de contrôle intégré pour hélicoptères, un système de démagnétisation, un compas gyroscopique, un compas magnétique ou un récepteur GPS/GLONASS, un loch électromagnétique, un loch Doppler, un appareil à écho, un système d'identification automatique AIS, un système de contrôle et de surveillance intégré ICMS, un appareil sonar, un système de périscope, une station météorologique, un radar, un système de communication, une identification ami ou ennemi IFF, un appareil d'assistance électronique, un répéteur ou une stabilisation d'empennage.
